# FASCICULE DE BREVET EUROPEEN

(11) **EP 1 838 568 B1**
(45) Date de publication et mention de la délivrance du brevet: **11.02.2009**
(21) Numéro de dépôt: 05824698.4
(22) Date de dépôt: 13.12.2005
(51) Int. Cl.: B62D 27/00, B62D 65/04

(54) **MODULE DE VEHICULE AUTOMOBILE COMPORTANT DES MOYENS DE CENTRAGE PERFECTIONNES PAR RAPPORT À LA CAISSE DU VEHICULE ET ELEMENT DE CAISSE ASSOCIE**
KRAFTFAHRZEUGMODUL MIT VERBESSERTEN ZENTRIERUNGSMITTELN IN BEZUG AUF DIE FAHRZEUGKAROSSERIE UND ENTSPRECHENDES KAROSSERIEELEMENT
MOTOR VEHICLE MODULE COMPRISING IMPROVED CENTERING MEANS WITH RELATION TO THE VEHICLE BODYWORK AND CORRESPONDING BODYWORK ELEMENT

(30) Priorité: 21.12.2004 FR 0453116
(43) Date de publication de la demande: 03.10.2007
(73) Titulaire: RENAULT S.A.S., 92100 Boulogne Billancourt (FR)
(72) Inventeur: BOGAERT, Philippe, F-78490 LES MESNILS (FR); LINGET, Jarno, F-91600 SAVIGNY SUR ORGE (FR)
(86) Numéro de dépôt international: PCT/FR2005/051079
(87) Numéro de publication internationale: WO 2006/067347

(56) Documents cités:
- EP-A- 0 945 330
- EP-A- 1 481 879
- US-A1- 2003 160 477
- PATENT ABSTRACTS OF JAPAN vol. 2000, no. 13, 5 février 2001 (2001-02-05) & JP 2000 280942 A (MITSUBISHI MOTORS CORP), 10 octobre 2000 (2000-10-10)

## Description

L'invention concerne un module de véhicule automobile.

L'invention concerne plus particulièrement un module de véhicule automobile comportant :
- une traverse de fixation du module sur la caisse du véhicule ;
- deux pions parallèles de positionnement vertical de la traverse par rapport à la caisse du véhicule dont chacun est agencé à une extrémité transversale de la traverse de fixation de manière que le corps de chaque pion soit apte à être reçu avec un jeu transversal dans un orifice de référence associé de la caisse du véhicule ;

On connaît déjà, par exemple du document US2003/0460477 A1, des modules de ce type utilisés comme modules frontaux de véhicule automobile, qui sont aussi appelés « faces avant techniques » et qui sont des structures de support destinées à recevoir différents équipements tels que le radiateur du groupe moteur, les optiques avant, des réservoirs, des boîtiers électroniques ou électriques, etc.

Ces modules frontaux permettent notamment de simplifier le montage du véhicule. En effet, les équipements que le module frontal supporte peuvent être agencés sur le module en dehors de la chaîne de montage du véhicule, le module équipé étant ensuite monté sur le véhicule en une seule opération.

Un module frontal est positionné sur la caisse du véhicule avec une légère tolérance géométrique par rapport aux pièces de carrosserie.

Néanmoins, pour obtenir les effets de style des véhicules modernes qui comportent des optiques à affleurement des pièces de carrosserie et des boucliers ou des bas de caisse prolongeant la carrosserie de manière continue à l'avant du véhicule, il est souhaitable de pouvoir disposer d'un module frontal dont le positionnement, et notamment le centrage transversal, par rapport à la caisse du véhicule soit très précis.

Pour résoudre ce problème, l'invention propose un module du type décrit précédemment, caractérise en ce qu'il comporte des moyens de centrage transversal comportent deux éléments déformables élastiquement selon une direction transversale dont chacun, lorsque la traverse est en position montée sur la caisse, est contraint transversalement entre une face transversale de la caisse du véhicule automobile extérieure à l'orifice de référence et une face transversale de liaison de la traverse de fixation.

Selon d'autres caractéristiques de l'invention :
- chaque face de liaison est agencée à une extrémité de la traverse de fixation ;
- les éléments déformables élastiquement sont rapportés sur la traverse de fixation ;
- les éléments déformables élastiquement sont réalisés venus de matière avec la traverse de fixation ;
- chaque élément déformable élastiquement comporte une face en forme de rampe qui est destinée à coopérer avec la caisse du véhicule automobile pour contraindre l'élément déformable élastiquement lorsque la traverse de fixation est déplacée vers sa position montée ;
- les éléments déformables élastiquement sont des lamelles souples ;
- les pions de positionnement sont rapportés sur la traverse de fixation ;
- les pions de positionnement sont réalisés venus de matière avec la traverse de fixation ;

L'invention concerne aussi un élément de caisse d'un véhicule automobile qui est apte à recevoir un module réalisé selon les enseignements de l'invention et qui comporte un orifice de référence qui est apte à recevoir les pions de positionnement du module, caractérisé en ce qu'il comporte une face transversale qui est externe à l'orifice de référence et qui, en position montée du module, est apte à contraindre l'élément déformable élastiquement.

Selon d'autres caractéristiques de l'élément de caisse :
- l'élément de caisse comporte une rampe qui est destinée à contraindre transversalement l'élément déformable élastiquement lorsque la traverse de fixation est déplacée vers sa position montée ;
- l'élément de caisse comporte des moyens de blocage de la traverse en position montée ;
- les moyens de blocage sont des moyens par emboîtement élastique de formes complémentaires entre l'élément déformable élastiquement et l'élément de caisse.

D'autres caractéristiques et avantages apparaîtront au cours de la lecture de la description détaillée qui va suivre pour la compréhension de laquelle on se reportera aux dessins annexés parmi lesquels :
- la figure 1 est une vue en perspective éclatée qui représente une caisse de véhicule automobile et un module de véhicule automobile conforme à l'invention ;
- la figure 2 est une vue de dessus de la figure 1 dans laquelle le module est en position démontée devant le véhicule ;
- la figure 3 est une vue de dessus similaire à celle de la figure 2 dans laquelle le module est monté sur la caisse du véhicule ;
- la figure 4 est une vue de détail à plus grande échelle de la figure 2 qui représente les moyens de centrage transversal et de positionnement vertical du module par rapport à la caisse du véhicule ;
- la figure 5 est une vue de détail à plus grande échelle de la figure 3 qui représente les moyens de centrage transversal et de positionnement vertical du module par rapport à la caisse du véhicule en position montée sur la caisse du véhicule.

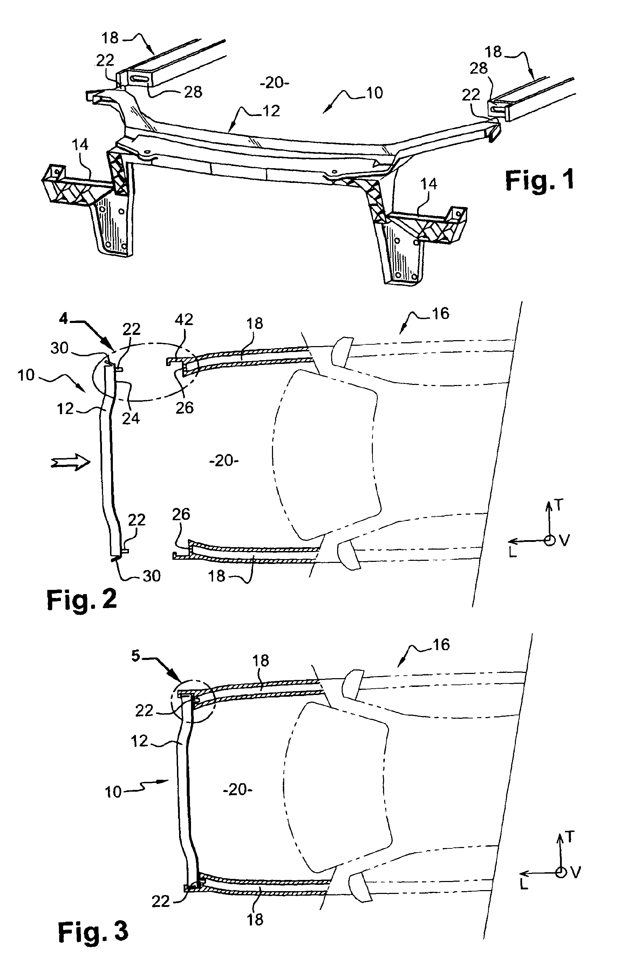

Dans la suite de la description, on adoptera à titre non limitatif une orientation longitudinale verticale et transversale indiquée par le trièdre L, V, T des figures 1 et 2.

Par la suite, des éléments identiques, similaires ou analogues seront indiqués par un même numéro de référence.

On a représenté à la figure 1, un module 10 de véhicule automobile qui comporte une traverse 12, d'orientation transversale, de fixation du module 10 sur la caisse d'un véhicule. Il s'agit ici, à titre non limitatif, d'un module frontal 10 de véhicule automobile.

Le module frontal 10 comporte ici une paire de supports latéraux 14. Chaque support latéral 14 est agencé sous une extrémité de la traverse de fixation 12. Ces supports latéraux 14 sont destinés à recevoir notamment une paire d'optiques ou feux avant qui ne seront pas détaillés ici.

Le module frontal 10 est en outre destiné à supporter différents accessoires (non représentés) qui sont préassemblés sur le module frontal 10. A titre d'exemple non limitatif, le module frontal 10 peut être équipé d'un support transversal (non représenté) de pare-choc, d'un avertisseur (non représenté), etc.

Comme représenté à la figure 3, le module frontal 10 ainsi équipé est destiné à être positionné sur la caisse du véhicule 16, puis fixé sur cette dernière.

Comme représenté aux figures, la caisse 16 du véhicule comporte deux longerons 18 longitudinaux latéraux. Les tronçons avant des longerons 18 encadrent latéralement le compartiment moteur 20 du véhicule. Le module frontal 10 est ici fixé à l'avant des longerons 18 de façon à délimiter le compartiment moteur 20 longitudinalement vers l'avant.

Dans la suite de la description, une face transversale qui est orientée vers le compartiment moteur 20 sera qualifiée de face intérieure tandis qu'une face transversale orientée selon une direction opposée sera qualifiée de face extérieure.

Comme représenté à la figure 3, le module frontal 10 comporte des moyens de positionnement pour positionner verticalement la traverse de fixation 12 par rapport à la caisse du véhicule 16.

Les moyens de positionnements comportent ici un pion 22 cylindrique de positionnement qui est agencé à chaque extrémité de la traverse de fixation 12. Dans ce mode de réalisation de l'invention, les deux pions de positionnement 22 sont plus particulièrement agencés sur une face verticale arrière 24 de la traverse de fixation 12.

Les pions de positionnement 22 s'étendent de manière parallèle, orthogonalement à la direction transversale. Dans le mode de réalisation représenté aux figures, l'axe de chaque pion de positionnement 22 s'étend longitudinalement vers l'arrière du véhicule 16.

Les pions 22 sont ici réalisés venus de matière avec la traverse de fixation 12.

Dans une variante non représentée de l'invention, les pions 22 sont rapportés sur la traverse de fixation 12.

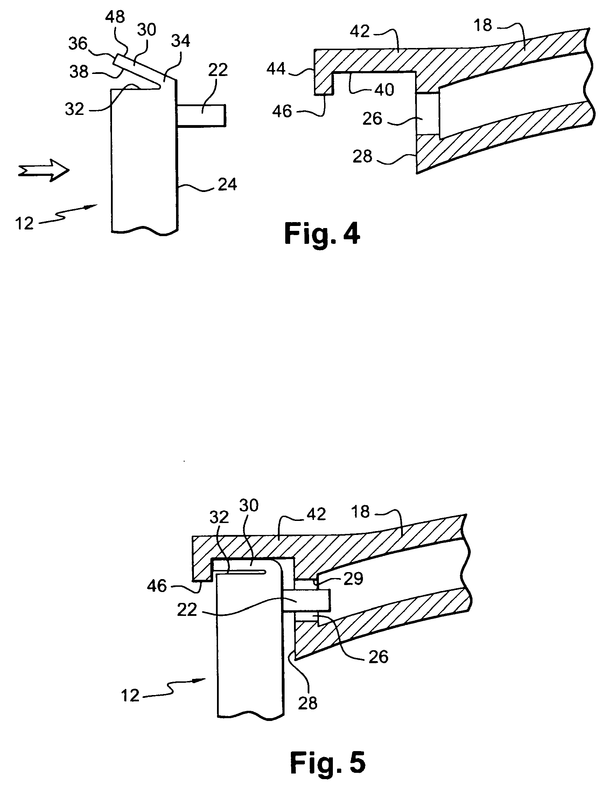

Chaque pion de positionnement 22 est destiné à être reçu dans un orifice de référence 26 qui est ici réalisé dans une paroi d'extrémité avant 28 des longerons 18 comme illustré aux figures 4 et 5.

Le corps de chaque pion de positionnement 22 est reçu avec jeu radial dans l'orifice de référence 26 associé. A cet effet, l'orifice de référence 26 a une forme de boutonnière qui s'étend transversalement dans la face avant 28 du longeron 18.

Cependant, le jeu existant entre la paroi interne 29 de l'orifice de référence 26 et le corps du pion de positionnement 22 ne permet pas d'obtenir un positionnement précis selon la direction transversale de la traverse de fixation 12 par rapport à la caisse du véhicule automobile 16.

Pour assurer le centrage de la traverse de fixation 12 par rapport à la caisse 16 du véhicule automobile, le module 10 comporte des moyens de centrage transversal 30.

Selon les enseignements de l'invention, les moyens de centrage comportent deux éléments 30 déformables élastiquement selon une direction transversale dont chacun, lorsque la traverse est en position montée sur la caisse, est contraint transversalement entre une face transversale d'appui de la caisse du véhicule automobile 16 extérieure à l'orifice de référence 26 et une face transversale de liaison de la traverse de fixation 12.

Dans l'exemple représenté aux figures, chaque élément déformable élastiquement est une lamelle 30 déformable élastiquement. Chaque lamelle 30 est ici agencée à une face transversale d'extrémité 32 de la traverse de fixation 12.

Les deux lamelles 30 sont ici identiques et elles sont agencées symétriquement sur la traverse de fixation 12 par rapport à un plan médian longitudinal vertical (non représenté) de la traverse 12. La description qui suit en référence à une lamelle 30 pourra donc s'appliquer indifféremment à l'une ou l'autre des deux lamelles 30.

Comme représenté à la figure 4, la lamelle 30 est ici orientée globalement selon une direction longitudinale "L". Elle comporte une première extrémité arrière fixe 34 qui est fixée à la face d'extrémité 32 de la traverse 12. La seconde extrémité avant 36 de la lamelle 30 est libre. La face latérale intérieure 38 de la lamelle 30 qui est en vis-à-vis de la face d'extrémité 28 de la traverse 12 est ainsi située à distance de la face d'extrémité 28.

En position non contrainte de la lamelle 30, l'extrémité libre 36 est éloignée transversalement de la face transversale d'extrémité 32 de la traverse 12. La lamelle 30 est ainsi déformable transversalement à la manière d'une poutre flexible dont une première extrémité est encastrée et dont la deuxième extrémité est libre.

Chaque lamelle 30 est ici réalisée venue de matière avec la traverse de fixation 12.

Selon une variante non représentée de l'invention, les lamelles 30 sont rapportées sur la traverse de fixation 12.

Comme représenté à la figure 5, chaque longeron 18 du véhicule comporte une face transversale d'appui 40 qui est agencée de manière à être en vis-à-vis de la lamelle 30 et plus particulièrement de l'extrémité libre 36, lorsque la traverse de fixation 12 est montée sur la caisse du véhicule 16.

Selon les enseignements de l'invention la face d'appui 40 est extérieure à l'orifice de référence 26, c'est-à-dire qu'elle ne forme pas une paroi interne de l'orifice de référence 26.

La face transversale d'appui 40 est ici portée par une aile verticale 42 qui s'étend longitudinalement vers l'avant à partir de la face avant du longeron 18.

L'extrémité avant 44 de l'aile 42 comporte ici un ergot 46 qui s'étend transversalement vers l'intérieur du compartiment moteur 20. L'ergot 46 est destiné à former une butée pour bloquer le coulissement longitudinal vers l'avant de l'extrémité libre 36 de la lamelle 30 lorsque la traverse de fixation 12 est en position montée.

Les deux faces transversales d'appui 40 de la caisse 16 sont éloignées transversalement l'une de l'autre d'une distance "D1" qui est inférieure à la distance "D2" d'éloignement transversal des extrémités libres 36 de chaque lamelle 30. Ainsi, en position montée de la traverse de fixation 12 sur la caisse du véhicule 16, les lamelles 30 sont déformées de façon que leur extrémité libre 36 soit en appui sur la face d'appui 40.

Avantageusement, la face latérale extérieure 48 de chaque lamelle 30 est inclinée par rapport à la direction longitudinale "L" de manière à former une rampe qui glisse sur l'extrémité 44 de l'aile 42 pour déformer automatiquement la lamelle 30 lorsque la traverse 12 est déplacée vers sa position montée selon une direction longitudinale.

Lors du montage du module frontal 10 sur la caisse du véhicule 16, le module frontal 10 est amené devant les parois avant 28 des longerons latéraux 18 de manière que les pions de centrage 22 soient en regard des orifices de référence 26 associés.

Le module frontal 10 est ensuite positionné sur les longerons 18 selon un mouvement de translation longitudinal vers l'arrière de façon que le corps du pion de centrage 22 coulisse longitudinalement à l'intérieur de l'orifice de référence 26 associé jusqu'à ce que le module frontal 10 soit en butée contre la caisse du véhicule 16, comme illustré aux figures 3 et 5. Le module 10 est ainsi positionné verticalement par rapport à la caisse du véhicule 16.

Lors du déplacement du module 10 vers sa position montée, la face latérale extérieure 48 de chaque lamelle 30 est amenée en appui contre l'extrémité avant 44 de l'aile 42. Puis, elle glisse contre l'extrémité 44 de l'aile 42 en déformant la lamelle 30 qui ploie transversalement vers l'intérieur jusqu'à ce que l'extrémité libre 36 de la lamelle 30 soit en contact avec la face d'appui 40.

Les lamelles 30 exercent ainsi deux efforts transversaux opposés dirigés vers l'extérieur contre les faces d'appui 40 de la caisse 16. L'élasticité en flexion des lamelles 30 est telle que lorsque les efforts transversaux s'équilibrent, le module 10 est centré transversalement par rapport à la caisse du véhicule 16. Lors du centrage du module 10, les pions 22 étant reçus avec un jeu transversal dans les orifices de références 26, ils sont libres de coulisser transversalement dans l'orifice de référence 26 associé.

L'ergot 44 permet de maintenir la traverse de fixation 12 en position montée jusqu'à ce qu'elle soit fixée sur la caisse 16, par exemple au moyen de vis. En effet, en cas de mouvement longitudinal vers l'avant de la traverse de fixation 12, l'extrémité libre 36 de la lamelle 30 vient alors en butée contre l'ergot 44, car la déformation de la lamelle 30 plaque l'extrémité libre 36 contre la face d'appui 46.

Selon une variante non représentée de l'invention, l'ergot 44 est porté par la lamelle 30 et la face d'appui 40 comporte un logement complémentaire qui est destiné à recevoir l'ergot 44 pour bloquer la traverse de fixation 12 en position montée.

Selon une autre variante non représentée de l'invention, l'extrémité avant 44 de l'aile 42 comporte une rampe qui est apte à déformer la lamelle 30 associée lorsque la traverse 12 est déplacée vers sa position montée. La lamelle 30 peut alors être orientée globalement selon une direction différente de la direction longitudinale.

Le fait que la face d'appui 40 soit agencée à l'extérieur de l'orifice de référence 26 permet d'agencer les lamelles élastiques 30 sur une face de liaison 32 qui est plus grande et plus accessible que les pions 22.

Cela permet avantageusement de simplifier la fabrication de la traverse de fixation 12 lorsque les lamelles sont réalisées venues de matière avec la traverse 12.

Cela permet aussi de dimensionner les lamelles 30 de façon qu'elles soient suffisamment rigides pour que la force transversale élastique qu'elles exercent sur la face d'appui 40 en position montée de la traverse soit suffisante pour déplacer transversalement la traverse de fixation 12 qui est susceptible d'être "lourde" lorsqu'elle est équipée d'éléments préassemblés.

Les éléments élastiques déformables ne sont pas limités au mode de réalisation en forme de lamelles 30 qui a été donné à titre d'exemple dans la description.

## Revendications

1. Module (10) de véhicule automobile comportant :
- une traverse (12) de fixation du module sur la caisse (16) du véhicule ;
- deux pions (22) parallèles de positionnement vertical de la traverse (12) par rapport à la caisse du véhicule (16) dont chacun est agencé longitudinalement à une extrémité transversale de la traverse de fixation (12) de manière que le corps de chaque pion (22) soit apte à être reçu avec un jeu transversal dans un orifice de référence (26) en forme de boutonnière transversale associé de la caisse du véhicule (16) ;
**caractérisé en ce qu'**il comporte des moyens (30) de centrage transversal du module (10) par rapport à la caisse du véhicule automobile (16), lesdits moyens de centrage transversal (30) comportant deux éléments (30) déformables élastiquement selon une direction transversale dont chacun, lorsque la traverse (12) est en position montée sur un élément (18) de la caisse (16), est contraint transversalement entre une face (40) de l'élément (18) de la caisse du véhicule automobile (16) orientée selon un plan longitudinal et extérieure à l'orifice de référence (26) et une face de liaison (32) de la traverse de fixation, orientée selon un plan longitudinal.

2. Module (10) selon l'une quelconque des revendications précédentes, **caractérisé en ce que** chaque face de liaison (32) est agencée à une extrémité de la traverse de fixation (12).

3. Module (10) selon la revendication précédente, **caractérisé en ce que** les éléments déformables élastiquement (30) sont rapportés sur la traverse de fixation (12).

4. Module (10) selon la revendication 2, **caractérisé en ce que** les éléments déformables élastiquement (30) sont réalisés venus de matière avec la traverse de fixation (12).

5. Module (10) selon l'une quelconque des revendications précédentes, **caractérisé en ce que** chaque élément déformable élastiquement (30) comporte une face (48) en forme de rampe qui est destinée à coopérer avec l'élément (18) de la caisse (16) du véhicule automobile (16) pour contraindre l'élément déformable élastiquement (30) lorsque la traverse de fixation (12) est déplacée vers sa position montée.

6. Module (10) selon l'une quelconque des revendications précédentes, **caractérisé en ce que** les éléments déformables élastiquement (30) sont des lamelles souples (30).

7. Module (10) selon l'une quelconque des revendications précédentes, **caractérisé en ce que** les pions de positionnement (22) sont rapportés sur la traverse de fixation (12).

8. Module (10) selon l'une quelconque des revendications 1 à 7, **caractérisé en ce que** les pions de positionnement (22) sont réalisés venus de matière avec la traverse de fixation (12).

9. Ensemble d'un élément (18) de caisse d'un véhicule automobile et d'un module (10) selon l'une quelconque des revendications précédentes, **caractérisé en ce que** l'élément (18) de caisse (16) comporte des moyens de blocage (44) de la traverse (12) en position montée.

10. Ensemble selon la revendication précédente, **caractérisé en ce que** les moyens de blocage (44) sont des moyens par emboîtement élastique de formes complémentaires entre l'élément déformable élastiquement (30) et l'élément de caisse (18).

## Claims

1. Motor vehicle module (10) comprising:
- a cross member (12) for attaching the module to the body (16) of the vehicle;
- two parallel pins (22) for vertically positioning the cross member (12) relative to the body (16) of the vehicle each of which is arranged longitudinally at one transverse end of the attachment cross member (12) so that the body of each pin (22) is capable of being received with a transverse clearance in a reference orifice (26) in the form of a transverse keyhole associated with the body (16) of the vehicle;
**characterized in that** it comprises means (30) for transversely centering the module (10) relative to the body (16) of the motor vehicle, said transverse centering means (30) comprising two elements (30) that can be elastically deformed in a transverse direction, each of which, when the cross member (12) is in an assembled position on an element (18) of the body (16), is pressed transversely between a face (40) of the element (18) of the body (16) of the motor vehicle oriented in a longitudinal plane and external to the reference orifice (26) and a connecting face (32) of the attachment cross member oriented in a longitudinal plane.

2. Module (10) according to the preceding claim, **characterized in that** each connecting face (32) is arranged at one end of the attachment cross member (12).

3. Module (10) according to the preceding claim, **characterized in that** the elastically deformable elements (30) are fitted to the attachment cross member (12).

4. Module (10) according to Claim 2, **characterized in that** the elastically deformable elements (30) are made in one piece with and of the same material as the attachment cross member (12).

5. Module (10) according to any one of the preceding claims, **characterized in that** each elastically deformable element (30) comprises a face (48) in the shape of a ramp that is designed to interact with the element (18) of the body (16) of the motor vehicle to press the elastically deformable element (30) when the attachment cross member (12) is moved toward its assembled position.

6. Module (10) according to any one of the preceding claims, **characterized in that** the elastically deformable elements (30) are flexible bars (30).

7. Module (10) according to any one of the preceding claims, **characterized in that** the positioning pins (22) are fitted to the attachment cross member (12).

8. Module (10) according to any one of Claims 1 to 7, **characterized in that** the positioning pins (22) are made in one piece with and of the same material as the attachment cross member (12).

9. Assembly of a body element (18) of a motor vehicle and of a module (10) according to any one of the preceding claims, **characterized in that** the element (18) of the body (16) comprises means (44) for immobilizing the cross member (12) in the assembled position.

10. Assembly according to the preceding claim, **characterized in that** the immobilization means (44) are means by elastic fitting of complementary shapes between the elastically deformable element (30) and the body element (18).

## Patentansprüche

1. Kraftfahrzeugmodul (10), mit:
- einer Querstrebe (12) für die Befestigung des Moduls an der Fahrzeugkarosserie (16);
- zwei parallelen Zapfen (22) für die vertikale Positionierung der Querstrebe (12) in Bezug auf die Fahrzeugkarosserie (16), wovon jeder an einem transversalen Ende der Befestigungsquerstrebe (12) longitudinal in der Weise angeordnet ist, dass der Körper jedes Zapfens (22) in einer Referenzöffnung (26) in Form eines transversalen Knopflochs, die der Fahrzeugkarosserie (16) zugeordnet ist, mit transversalem Spiel aufgenommen werden kann;
**dadurch gekennzeichnet, dass** es Mittel (30) für die transversale Zentrierung des Moduls (10) in Bezug auf die Kraftfahrzeugkarosserie (16) enthält, wobei die Mittel (30) für die transversale Zentrierung zwei Elemente (30) enthält, die in einer transversalen Richtung elastisch verformbar sind, wovon jedes dann, wenn die Querstrebe (12) in einer an einem Element (18) der Karosserie (16) montierten Position ist, zwischen einer Fläche (40) des Elements (18) der Kraftfahrzeugkarosserie (16), die in einer longitudinalen Ebene orientiert ist und sich außerhalb der Referenzöffnung (26) befindet, und einer Fläche (32) für die Verbindung der Befestigungsquerstrebe, die in einer longitudinalen Ebene orientiert ist, transversal eingeklemmt ist.

2. Modul (10) nach dem vorhergehenden Anspruch, **dadurch gekennzeichnet, dass** jede Verbindungsfläche (32) an einem Ende der Befestigungsquerstrebe (12) angeordnet ist.

3. Modul (10) nach dem vorhergehenden Anspruch, **dadurch gekennzeichnet, dass** die elastisch verformbaren Elemente (30) an die Befestigungsquerstrebe (12) angefügt sind.

4. Modul (10) nach Anspruch 2, **dadurch gekennzeichnet, dass** die elastisch verformbaren Elemente (30) mit der Befestigungsquerstrebe (12) einteilig ausgebildet sind.

5. Modul (10) nach einem der vorhergehenden Ansprüche, **dadurch gekennzeichnet, dass** jedes elastisch verformbare Element (30) eine rampenförmige Fläche (48) aufweist, die dazu vorgesehen ist, mit dem Element (18) der Kraftfahrzeugkarosserie (16) zusammenzuwirken, um das elastisch verformbare Element (30) einzuklemmen, wenn die Befestigungsquerstrebe (12) in ihre montierte Position verlagert ist.

6. Modul (10) nach einem der vorhergehenden Ansprüche, **dadurch gekennzeichnet, dass** die elastisch verformbaren Elemente (30) nachgiebige Lamellen (30) sind.

7. Modul (10) nach einem der vorhergehenden Ansprüche, **dadurch gekennzeichnet, dass** die Positionierungszapfen (22) an die Befestigungsquerstrebe (12) angefügt sind.

8. Modul (10) nach einem der Ansprüche 1 bis 7, **dadurch gekennzeichnet, dass** die Positionierungszapfen (22) mit der Befestigungsquerstrebe 12 einteilig ausgebildet sind.

9. Anordnung aus einem Element (18) einer Kraftfahrzeugkarosserie und aus einem Modul (10) nach einem der vorhergehenden Ansprüche, **dadurch gekennzeichnet, dass** das Element (18) der Karosserie (16) Mittel (44) zum Blockieren der Querstrebe (12) in der montierten Position aufweist.

10. Anordnung nach dem vorhergehenden Anspruch, **dadurch gekennzeichnet, dass** die Blockiermittel (44) Mittel sind, die ein elastisches Einpassen komplementärer Formen zwischen dem elastisch verformbaren Element (30) und dem Karosserieelement (18) bewirken.
